# EUROPEAN PATENT SPECIFICATION

(11) **EP 4 040 754 B1**
(45) Date of publication and mention of the grant of the patent: **27.09.2023**
(21) Application number: 21386014.1
(22) Date of filing: 05.02.2021
(51) Int. Cl.: H04L 9/40, H04L 9/32, H04L 9/00, H04L 67/02

(54) **ELECTRONIC MESSAGING SECURITY AND AUTHENTICATION**
SICHERHEIT UND AUTHENTIFIZIERUNG FÜR ELEKTRONISCHE NACHRICHTENÜBERMITTLUNG
SÉCURITÉ ET AUTHENTIFICATION DE MESSAGERIE ÉLECTRONIQUE

(43) Date of publication of application: 10.08.2022
(73) Proprietor: Fujitsu Limited, Kawasaki-shi, Kanagawa 211-8588 (JP)
(72) Inventor: Amoutzias, Athanasios, Hayes, UB3 2FS (GB); Takenaka, Masahiko, Kawasaki-shi Kanagawa, 211-8588 (JP); Ito, Kouichi, Kawasaki-shi Kanagawa, 211-8588 (JP); Katayama, Yoshinori, Kawasaki-shi Kanagawa, 211-8588 (JP)
(74) Representative: Haseltine Lake Kempner LLP

(56) References cited:
- WO-A1-2020/091889
- GB-A- 2 584 455
- Varghese Arun: "Technical Disclosure Commons Defensive Publications Series EMAIL VERIFICATION SERVICE USING BLOCKCHAIN", , 10 September 2019 (2019-09-10), XP055798666, Retrieved from the Internet: URL:https://www.tdcommons.org/cgi/viewcont ent.cgi?article=3542&context=dpubs_series [retrieved on 2021-04-25]

## Description

Embodiments relate to security and authentication of electronic messaging systems, especially email.

Business email compromise (BEC) attacks (for example, spoofing and spear phishing) are a big issue for large and small businesses alike, and systems are used to provide email protection. Although these systems generally work well, in some situations they are not very effective. In 2017 the cost of damage from BEC attacks was estimated at $3bn.

State of the art email security systems focus on classifying emails as malicious or spam. As a first layer, the reputation of the email IP address and URL are taken into account to determine if an email is linked to a past malicious attack.

There are also systems that verify email authenticity, each with their own limitations, as discussed below.

One such system is known as Sender Policy Framework (SPF). It is effective in blocking domain spoofing without the implementation of other authentication standards (dependencies). However, forwarded messages typically cause SPF to fail authentication verification. The forwarder's SPF record does not contain the original sender's authorized IP address. In addition, if senders' SPF records are out of date, not all authorized IP addresses are legitimate since they may change overtime. SPF verification is performed on the Mail From domain, which is not visible to the recipient. Furthermore, SPF is not effective with emails forged in shared hosting scenarios (i.e. where a legitimate email server shares the same IP address with a soon-to-be malicious server), since all mail will appear to be coming from the same IP address.

Another system known as DomainKeys Identified Mail (DKIM) is, together with Domain-based Message Authentication, Reporting and Conformance (DMARC), used to combat sender spoofing in e-mail. In DKIM the mail server applies a digital signature to the mail which may then be validated by the recipient. This is considered a proof that the mail was actually sent by the mail server responsible for the sender's domain.

In practice the mitigation system used may be a combination of SPF, DKIM and DMARC. With SPF the receiving mail server checks if the sender's IP address is the expected one. With DKIM the sender's mail server adds a digital signature to the mail so that the recipient may verify that the email was sent from the expected server and was not modified. DMARC builds on top of SPF and DKIM, adding a policy on how to deal with emails that do not match expectations and providing a way to send reports about such problems to the owner of the domain. All three technologies rely on a domain name system (DNS) to provide the policies, the domain administrator adding the policies in the DNS settings of his domain.

When everything is applied properly this system is effective. However, SPF may easily result in false positives if mail forwarding or mailing lists are involved and DKIM is not as easily deployed as SPF. DMARC only requires that either the SPF or the DKIM check provides a positive result.

Furthermore, there is no way to have the recipient provide a receipt in an undeniable way that they received the email. In traditional means, there are cases where a recipient needs to provide a signature, as an acknowledgement that they have received a document, usually in legal use cases.

The paper by Varghese Arun entitled " EMAIL VERIFICATION SERVICE USING BLOCKCHAIN", Technical Disclosure Commons Defensive Publications Series, 10 September 2019, discloses a secure messaging method in accordance with the precharacterising portions of claims 1 and 2. Similar methods are disclosed in WO2020/091889A1.

The present invention is defined in the independent claims. Optional embodiments are defined in the dependent claims.

According to an embodiment of a first aspect a secure electronic messaging method may comprise, at a mail user agent of an electronic message sender: creating a hash of a message body, an identity of the sender and an identity of at least one intended recipient of an electronic message to be sent; including the hash in a transaction, committing the transaction to a blockchain network, and receiving from the blockchain network a blockchain transaction identifier in respect of the committed transaction; and appending the blockchain transaction identifier to a header of the electronic message before sending the electronic message to the recipient.

A method embodying the first aspect may further comprise: after sending an electronic message, querying a receipt table associated with the blockchain network to determine whether the table stores a receipt for the stored hash; when it is determined that the table stores a receipt for the stored hash, determining whether an entity that issued the stored receipt is an intended recipient of the electronic message; and when the entity that issued the stored receipt is an intended recipient of the electronic message, determining that the intended recipient received the electronic message.

According to an embodiment of a second aspect a secure electronic messaging method may comprise, at a mail user agent of an electronic message recipient: in respect of an electronic message received from a purported sender, determining if a blockchain transaction identifier is appended to a header of the electronic message; when a blockchain transaction identifier is appended to the header of the electronic message, creating a hash of a body of the message, the purported identity of the sender indicated in the electronic message and the identity of the recipient indicated in the electronic message, and comparing the created hash with a hash stored on a blockchain network identified by the blockchain transaction identifier; when the created hash matches the stored hash, determining that it is possible that the received electronic message is from the sender indicated in the electronic message; and when the created hash does not match with the stored hash, determining that the received electronic message is not from the sender indicated in the electronic message.

A method embodying the second aspect may further comprise: when the created hash matches the stored hash, determining if there is a blockchain address registry associated with the blockchain network; when there is a blockchain address registry associated with the blockchain network, checking the blockchain address registry to determine if a blockchain address corresponding to the blockchain transaction identifier has an associated valid address in the blockchain address registry; when an associated valid address is present in the blockchain address registry, determining that the electronic message was sent by the sender indicated in the electronic message; and when an associated valid address is not present in the blockchain address registry, determining that the electronic message was not sent by the sender indicated in the electronic message.

A method embodying the second aspect may further comprise: committing a receipt transaction to the blockchain network in respect of the received electronic message.

According to an embodiment of a third aspect a secure electronic messaging method may comprise, at a node of a blockchain network: receiving, from a mail user agent, a receipt transaction in respect of a hash stored in the blockchain network, which hash is associated with a sent email; and updating a receipt table associated with the blockchain network to indicate storage of a receipt transaction in respect of the hash.

According to an embodiment of a fourth aspect there is provided a computer program which, when executed on a computer, causes that computer to carry out one of: (i) a method according to the first aspect, or (ii) a method according to the second aspect, or (iii) a method according to the first and second aspects.

According to an embodiment of a fifth aspect there is provided a computer program which, when executed at a node of a blockchain network, causes that node to carry out a method according to the third aspect.

According to an embodiment of a sixth aspect electronic apparatus may comprise: a processor; a communication device to send electronic messages and communicate with a blockchain network; and a memory storing instructions to cause the processor, in respect of an electronic message to be sent, to: create a hash of a body of the electronic message to be sent, an identity of a sender of the electronic message and an identity of at least one intended recipient of the electronic message; include the hash in a transaction, and cause the communication device to commit the transaction to a blockchain network and receive from the blockchain network a blockchain transaction identifier in respect of the committed transaction; and append the blockchain transaction identifier to a header of the electronic message before causing the communication device to send the electronic message to the recipient.

In apparatus embodying the sixth aspect the instructions may also cause the processor to: after sending the electronic message, query a receipt table associated with the blockchain network to determine whether the table stores a receipt for the stored hash; when it is determined that the table stores a receipt for the stored hash, determine whether an entity that issued the stored receipt is an intended recipient of the electronic message; and when the entity that issued the stored receipt is an intended recipient of the electronic message, determine that the intended recipient received the electronic message and notify the sender accordingly.

In apparatus embodying the sixth aspect the instructions may also cause the processor, in respect of an electronic message received from a purported sender, to: determine if a blockchain transaction identifier is appended to a header of the electronic message; when a blockchain transaction identifier is appended to the header of the electronic message, create a hash of a body of the message, the purported identity of the sender indicated in the electronic message and the identity of the recipient indicated in the electronic message, use the communication device to find a hash stored on a blockchain network identified by the blockchain transaction identifier, and compare the created hash with the stored hash; when the created hash matches the stored hash, determine that it is possible that the received electronic message is from the sender indicated in the electronic message; and when the created hash does not match with the stored hash, determine that the received electronic message is not from the sender indicated in the electronic message and alert the recipient accordingly.

In apparatus embodying the sixth aspect the instructions may also cause the processor to: when the created hash matches the stored hash, determine if there is a blockchain address registry associated with the blockchain network; when there is a blockchain address registry associated with the blockchain network, use the communication device to check the blockchain address registry to determine if a blockchain address corresponding to the blockchain transaction identifier has an associated valid address present in the blockchain address registry; when an associated valid address is present in the blockchain address registry, determine that the electronic message was sent by the sender indicated in the electronic message and inform the recipient that the electronic message is authenticated; and when an associated valid address is not present in the blockchain address registry, determine that the electronic message was not sent by the sender indicated in the electronic message and alert the recipient accordingly.

In apparatus embodying the sixth aspect the instructions may also cause the processor to: cause the communication device to commit a receipt transaction to the blockchain network in respect of the received electronic message.

According to an embodiment of a seventh aspect electronic apparatus may comprise: a blockchain address registry comprising a table to store at least one blockchain address in association with an entity which sends electronic messages utilizing the blockchain address and a flag to indicate the validity status of the stored blockchain address; and a communication link whereby contents of the table are publicly accessible for read purposes.

Embodiments provide a method and apparatus for mitigating BEC attacks which leverage existing blockchain networks to register proofs that an email was sent and received, and authenticate the senders.

By relying on blockchain identity management, extra public key infrastructure (PKI) costs may be avoided. Additionally, the system may provide functionality to provide non-repudiation read receipts. Finally, in case of permissionless blockchain systems, a registry component may provide identity management by binding organizational identities to blockchain identities.

By using blockchain networks for email recipient non-repudiation, it is possible to provide an undeniable acknowledgement that the email was received. The recipient is able to verify the sender's identity, and the sender is able to tell if the email was read by the intended recipients or not, without the recipient being able to deny the action of reading the mail (non-repudiation). The proposed system is blockchain agnostic and may be used on both permissioned and permissionless blockchains.

Embodiments may be applied to any electronic messaging system where authentication of the sender and/or non-repudiation of the received messages on the recipient side are a necessity. The ability to verify the sender will be useful to all users, but especially those that deal with money transfers within an organization. In addition, the ability to verify that an electronic message was sent and received will provide a sender with additional information and a non-repudiation claim for recipients.

Embodiments have the potential to minimize BEC attacks by having organizations that are part of a consortium blockchain network leverage their network for email verification on the part of both the sender and the recipient.

Reference will now be made, by way of example, to the accompanying drawings, in which:
Figure 1 is a flowchart of a method according to a first embodiment;
Figure 2A is a diagram illustrating a relationship table for use in explaining a second embodiment;
Figure 2B is a diagram for use in explaining a system according to the second embodiment;
Figure 2C is a flowchart of a method carried out at a recipient's email client according to the second embodiment;
Figure 3 is a flowchart of a method carried out at a recipient's email client according to the first embodiment;
Figure 4 is a sequence diagram of a method according to the first embodiment;
Figure 5 is a diagram for use in explaining an aspect of the first and second embodiments;
Figure 6 is a diagram for use in explaining an aspect of the first embodiment;
Figure 7 is a diagram for use in explaining another aspect of the first embodiment;
Figure 8 is a diagram illustrating interactions between elements of the first and second embodiments;
Figures 9 and 10 are diagrams for use in explaining an application of the first and second embodiments; and
Figure 11 is a block diagram of a computing device suitable for carrying out a method according to the first and/or second embodiment.

Embodiments will now be described with reference to email systems, but it will be clear that such embodiments may also be applied to other electronic messaging systems.

As mentioned above there are many email authentication solutions currently in use. However, these approaches do not provide information on the recipient's part (if the mail was opened - non-repudiation on the recipient's part), and there are cases where the system is improperly configured resulting in vulnerabilities.

The present proposal provides information on the sender and recipient as well as mitigating spoofing attacks by using a common ground to provide proof that an email was sent by the purported sender and received by the intended recipient. In particular, the proposed system utilizes private/permissioned blockchain networks where blockchain identities are already issued (but may be adapted for use with public/permissionless blockchain networks) to authenticate the sender. This system does not have to be used as a replacement for current email security methods, but may if desired be used in addition to them.

In an embodiment of the present proposal a known address/identity holder that is tied to an email address submits a transaction on a blockchain. This transaction includes a hash of the email details in order for the recipient to verify the contents and the sender. The recipient informs the sender that they have received the email by submitting another transaction. The solution is suitable for every blockchain system and allows the sender to be verified, non-repudiation receipts from the recipient to be provided to the sender, and senders to be verified even when a public blockchain is used.

In a particular embodiment an email sender effectively signs their email with their blockchain identity by committing a transaction to the blockchain containing a hash of the email body and list of recipients. Upon successful commitment the transaction identifier (ID) is included in the email header. A recipient of the email is able to verify the origin of the email by looking up the transaction ID and re-computing the hash that the email was sent by the claimed sender. The recipient acknowledges the email after looking up and verifying the hash. They submit a new transaction that contains the hash of the email effectively acknowledging in an undeniable way that they received the email. The sender is able to query the smart-contract storage for the particular hash to check if it was received or not.

On permissioned blockchains the identity is handled on the blockchain level, and one benefit of the present proposal is that identity management costs may be reduced since more functions are included in the blockchain system. On permissionless blockchains an additional component is needed to manage identities that binds the organizational identities to blockchain identities, as described later.

Unlike the encryption program known as Pretty Good Privacy (PGP), that provides cryptographic privacy and authentication for data communication, embodiments do not provide a separate certificate attached to the email to authenticate identity, but instead data relating to the identity of the sender are committed to the sender's blockchain.

By following this approach it is possible to achieve:
- Usage of an already set-up blockchain infrastructure for an additional purpose and in some cases reduce the need for an organizational PKI.
- Email timestamping: a way to show that an email was sent with a specific content at a specific time.
- Validation of the sender: crucial in cases of lawyers, insurers, brokers and any other party involved in banking or legal matters.
- Validation that a recipient received the email (non-repudiation).

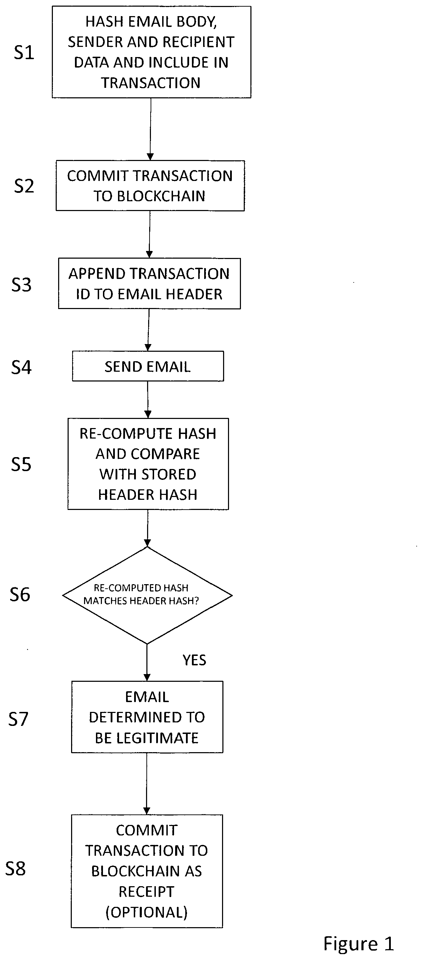

A method according to an embodiment is carried out partly by a mail user agent (hereafter "email client") of an email sender and partly by an email client of an email recipient. The mail user agent, or email client, may be a software program executable to provide electronic messaging, such as email. As shown in the flowchart of Figure 1, the method begins, at step S1, by the email client of the sender creating a hash of a body of the email to be sent, together with sender and recipient data, and including the hash in a transaction. Steps S2 to S4 are also carried out by the email client of the sender. At step S2, the transaction is committed to a blockchain. At step S3, the transaction ID is appended to a header of the email, and at step S4 the email is sent. As the sender of the email is effectively signing the email with their blockchain identity, spoofing is not possible. At step S5 the email client of the recipient of the email re-computes the hash and compares it with the header hash. At step S6 it is determined that the two hashes match, so at step S7 the email is considered to be legitimate. At step S8 the recipient's email client commits a transaction to the blockchain as proof that the email was received. This action means that the recipient cannot repudiate having received the email.

In the above description it is assumed that a permissioned blockchain network is used, but the idea may be extended to a permissionless blockchain network by the usage of an additional component for identity management, hereafter referred as a Registry. Identities of participants are issued by a consortium's authorities, and each company in the consortium maintains its own registry, which will be publicly available for users to check. The companies will be responsible for keeping their Registry up to date, including the (revocation) status of each entry.

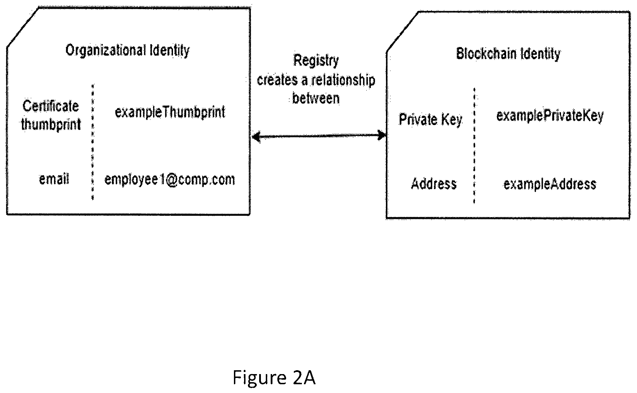

As shown in Figure 2A, the Registry creates a relationship between Organizational Identity (e.g. email address of an employee of the organisation, certificate thumbprint) and Blockchain Identity (e.g. address, private key). It binds the Organizational identity to a Blockchain Identity. This is crucial in permissionless networks because anyone could commit a transaction to the network and spoof the email address.

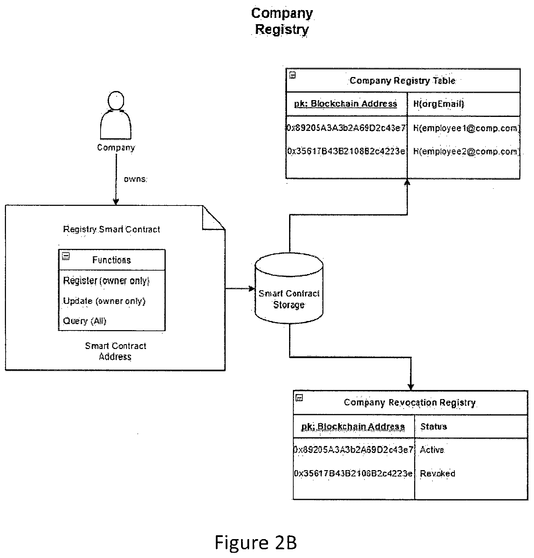

Figure 2B illustrates an example of a Registry system, the functions and the tables of the Registry, and revocation status. The function *Register()* registers a relation of a blockchain address to an organizational email; it may be triggered only by the entity that is responsible for the Registry. As mentioned above, each company is responsible for maintaining its own registry. The function *Update()* updates the Company Revocation Registry table, and it may change the status of a blockchain address that is already registered to "Active" or "Revoked"; the function may be triggered only by the responsible entity. The function *Query()* may be used by external parties in order to verify blockchain addresses. If the blockchain addresses that are queried have a corresponding email, then it may be assumed that the blockchain address belongs to this email address under this company, so the sender is verified.

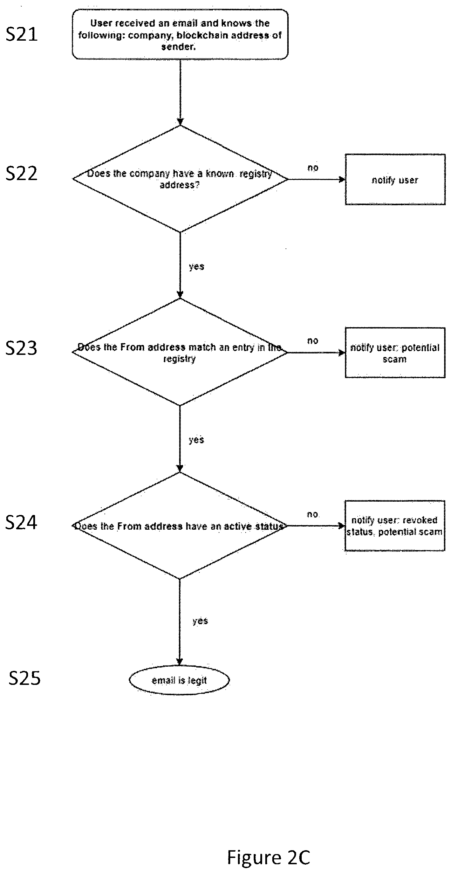

Figure 2C is a flowchart of a process of verifying a blockchain address with a Registry when a permissionless blockchain network is used. At step S21 an email client of a user receives an email, from which it can determine the company and blockchain address of the purported sender. At step S22 the email client determines if the company has a known Registry address. If not, the email client merely notifies the user that an email has been received. However, if the company does have a known Registry address then at step S23 the email client determines if the From address of the email matches an entry in the company's Registry. If a match for the From address cannot be found in the company's Registry, then the user is notified by the email client that the email is suspicious. On the other hand, if a match for the From address can be found, then at step S24 the email client determines whether or not the From address has an active status in the company's Registry. If the From address has a non-active/revoked status, then the user is notified by the email client that the email is suspicious. However, if the From address is confirmed as being active, then at step S25 the user is informed that the email appears to be legitimate.

In the case of a consortium blockchain network there are many entities and stakeholders that use a common ground to exchange information by creating transactions. In the context of the present proposal, the kind of transactions is irrelevant. The implementation of a consortium blockchain has different Hyperledger Fabric channels, where each channel has its own participants and blockchain. A channel may be created particularly for email use and all the interested parties could join this channel, but this is not necessary, as any channel may be used for this purpose. However, if a new channel is created specifically for email use, channels that are used for other purposes will not be further loaded.

In a method according to an embodiment, when a user writes an email using any email client of the user's choice, for example MS Outlook^{™}, a plug-in will trigger the function to include the email in the blockchain. The plug-in design is out of the scope of the present proposal, but a minimum description of its functionality is given below.

The plug-in will recognise from the list of recipients that one or more recipients is a member of the consortium, and will trigger a "Send Verification Function - SVF". By triggering this function, the email client plug-in will hash the data that consists of (a) recipients, (b) sender and (c) email body, and will commit this hash to the blockchain. Upon successful commitment the email client plug-in will receive a transaction ID. It will append the transaction ID into the email header and send the email in the usual manner.

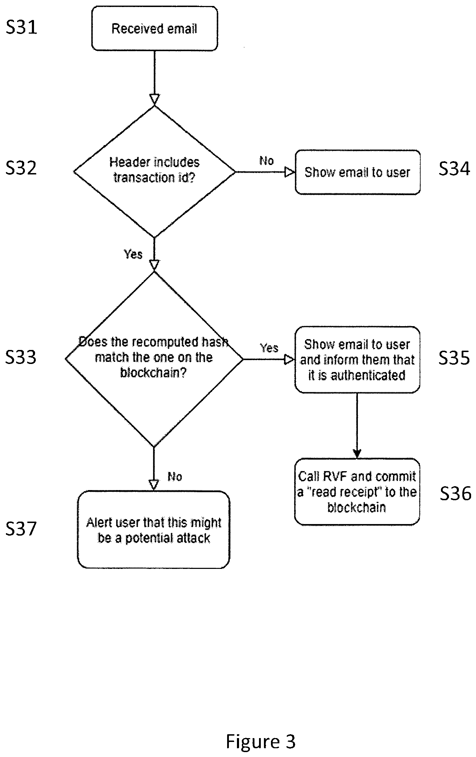

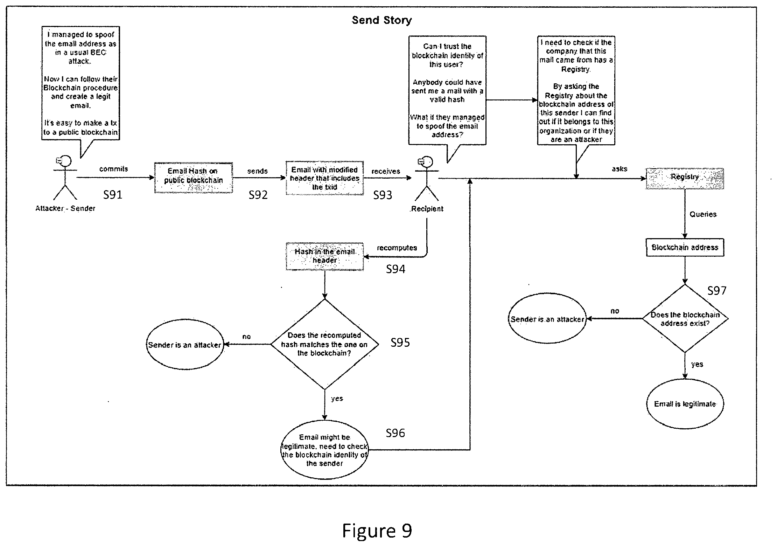

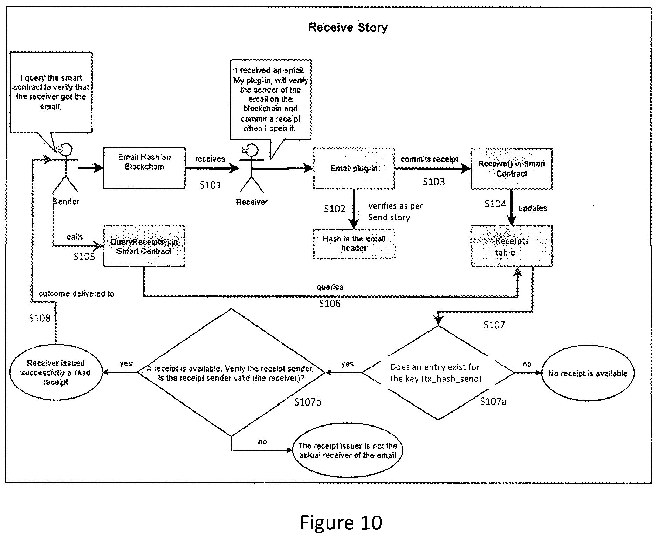

As depicted in the control flow diagram in Figure 3 (as well as in the User story diagrams shown in Figures 9 and 10), when an email is received (step S31) by an email client of a recipient, a plug-in at the email client will recognise that the sender is part of the consortium and it will expect a transaction ID in the header of the email. The plug-in determines at step S32 if there is a transaction ID. If there is no transaction ID (NO at step S32), then at step S34 the email is shown to the user. If there is a transaction ID, then at step S33 the plug-in re-computes the hash and queries the blockchain to determine whether the re-computed hash matches the one that is stored on the blockchain. If the hashes match (Yes at step S33), then at step S35 the user is informed that the email is considered to be legitimate and authenticated. Otherwise (NO at step S33), at step S37 the user is informed that a potentially suspicious email has been received.

After step S35 there is an optional step S36. Since the recipient has received the email and the blockchain has been queried, a "Receive Verification Function" (RVF) may be triggered that will create a transaction on behalf of the recipient that will represent a "read" receipt to inform the sender that they have received the email. This will prevent the recipient subsequently repudiating receipt of the email concerned and will also give information to the sender. This action may be hardcoded to the email plug-in that is federated and enforced by their organizations.

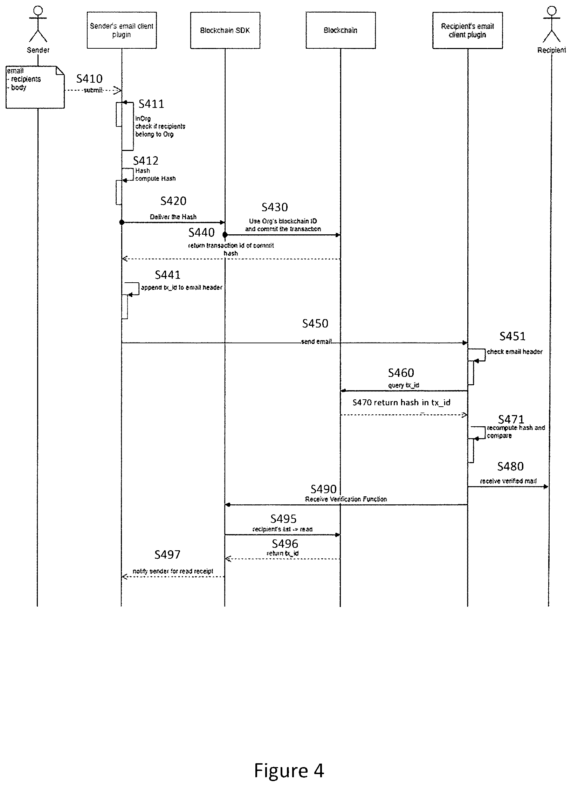

The whole process is depicted in the sequence diagram of Figure 4. At step S410 of the sequence a sender creates an email, with body and at least one recipient, and sends it to the sender's email client plug-in. At step S411 the email client plug-in checks if the recipient belongs to the sender's organization or a consortium of which the organization is a member, and if so at step S412 computes a hash of the data consisting of the sender, recipient(s) and email body. At step S420 the computed hash is sent to the relevant blockchain software development kit (SDK). At step S430 the blockchain SDK uses the organization's blockchain identity and commits the transaction to the blockchain. At step S440 the blockchain returns the transaction ID of the committed hash to the sender's email client plug-in, which at step S441 appends the transaction ID to the header of the email before sending the email to the recipient's email client plug-in at step S450. At step S451 the recipient's email client plug-in checks the email header for the transaction ID and at steps S46 and S47 queries the transaction ID with the blockchain to obtain the corresponding hash. At step S471 the recipient's email client plug-in re-computes the hash of the received email and compares it with the hash stored on the blockchain. If the hashes match then at step S480 the email is verified and sent to the recipient. In addition, if desired, the recipient's email client plug-in may at step S490 send a request ("Receive Verification Function") to the blockchain, via the blockchain SDK, to create (at steps 495 and S496) a transaction ("read" receipt) on behalf of the recipient indicating that the intended recipient has received the email. In particular, upon receipt of the Receive Verification Function, the blockchain SDK commits (S495) a hash of the receipt to the blockchain that is matched (S496) with the hash of the email that was sent to determine if the recipient whose email client plug-in issued the Receiver Verification Function is one of the intended recipients of the email. At step S497 the blockchain SDK notifies the sender's email client that a "read" receipt has been received from the recipient.

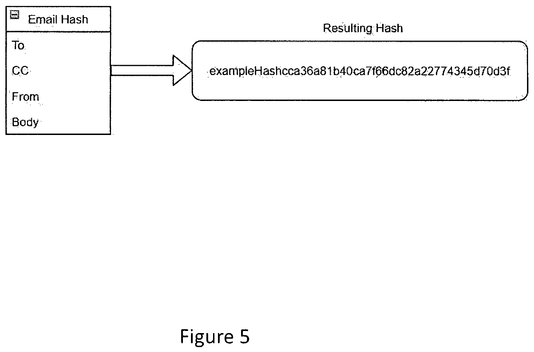

Examples of the objects hashed and stored in the blockchain are shown in Figure 5. The object *Email_Hash* contains the hash of the email, the name/identity of the sender and the name/identity of each recipient. *Resulting Hash* is the information that will be included in a transaction in the blockchain.

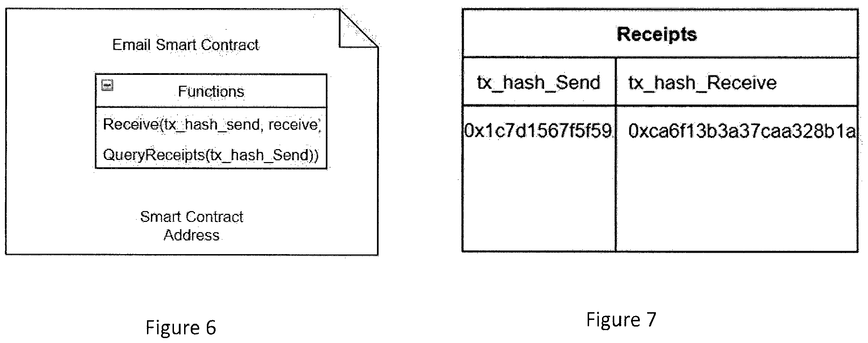

Figure 6 shows examples of functions offered for the receipts. Function *Receive()* commits a hash of the receipt that is matched with the hash of the email that was sent. Function *QueryReceipts()* queries, for a particular send hash, whether there is a receipt for that particular hash. If found, the identity of the user is checked and if it exists on the list of recipients, then the receipt is valid.

Figure 7 shows an exemplary Receipts table. The functions of Figure 6 are responsible for creating entries in this table. *tx_hash_Send* is the hash of the email that was sent and *tx_hash_Receive* is the hash of the receipt, the recipient's acknowledgment.

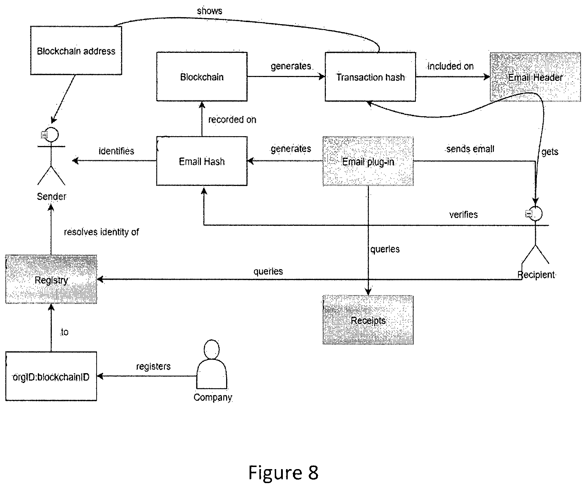

Figure 8 illustrates the interactions between the various elements involved in the above-described process. It includes cases of both a permissioned and a permissionless blockchain. This Figure is also supported and explained by the two exemplary "Send" and "Receive" user stories in Figures 9 and 10 which will now be described.

Figure 9 depicts an example where an attacker sends a malicious email using a permissionless blockchain. The permissionless use case includes the permissioned use case, and in that case the Registry part may be omitted since identity management is inherent to permissioned setups.

At step S91 the attacker creates a malicious email with a spoofed email address, creates a hash of the email data (sender, recipient and email body) and commits the hash to a public blockchain. At step S92 the attacker sends the email, with the transaction ID received from the blockchain embedded in the email header, to the recipient who receives it at step S93. The recipient's email client re-computes the hash in the email header and at step S95 checks whether the re-computed hash matches the one on the blockchain to determine whether or not the email appears to be legitimate. If the hashes do not match the email is determined to be from an attacker. However, if the hashes match (YES at step S95) there is still the possibility that the sender is using a spoofed email address, so as step S96 the recipient's email client asks the Registry for the blockchain if the email address is registered. If at step S97 the email address is found to exist in the Registry then the email is considered to be legitimate, but if not it is assumed to have come from an attacker.

Figure 10 depicts an example of how a recipient sends a receipt and how the sender verifies the receipt. In step S101 a recipient receives an email in which a blockchain transaction ID has been added to the email header by a sender's email client plug-in. In response, at step S102 the recipient's email client plug-in determines, in accordance with the process of steps S94 to S97 of Figure 9 discussed above, whether the email is actually from the purported sender. Separately, at step S103 the recipient's email client plug-in commits a receipt to the relevant blockchain. At step S104 the Receipts table is updated to show that a receipt for the email has been received from the recipient. Some time after sending the email, the sender at step S105 checks with the blockchain for a receipt from the recipient. At step S106 the blockchain SDK queries the Receipts table to determine if a receipt for the sender's email has been received and if it is verified as having been received by the intended recipient. At step S107 the Receipts table carries out a process to check whether an entry exists in the table for the sender's email (sub-step S107a) and if so whether or not it was received by the intended recipient (sub-step S107b), and at step S108 the sender is advised accordingly.

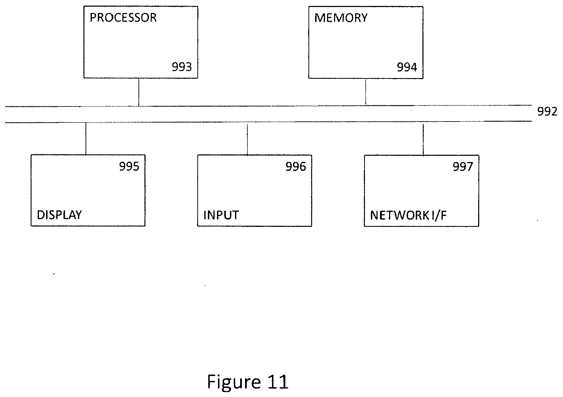

Figure 11 is a block diagram of a computing device, such as a data storage server, which embodies the present invention, and which may be used to implement some or all of the operations of a method embodying the present invention, and perform some or all of the tasks of apparatus of an embodiment. For example, the computing device of Figure 11 may be used to implement some or all the tasks of a blockchain network node and perform some or all the operations of the blockchain network node shown in Figure 4, or only to implement some or all of the processes of one of the mail user agents described with reference to Figures 1, 4, 9 and/or 10, or only to implement one or more of the processes of a mail user agent described with reference to Figures 2C and/or 3.

The computing device comprises a processor 993 and memory 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions, such as an email client, or have data structures stored thereon, such as a Registry of blockchain addresses or a Receipts table. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing some of the sequences of an email client or a blockchain network node shown in Figure 4, or for implementing one or more of the processes of an email client described with reference to Figures 1, 2C, 3, 9 and/or 10. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 1, 2C, 3, 9 and 10 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device, such as an email to be sent, a receipt for a sent email, a received email or a warning that a received email is not legitimate, and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network, for example so as to send and receive emails, receipts and/or warnings, and/or to communicate with a blockchain network node and/or blockchain address Registry. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 11. Such a computing device need not have every component illustrated in Figure 11, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

The following list of definitions describes the meaning of some technical terms in the context of this invention proposal:
Public or Permissionless blockchain is a system where all this information is exposed to the public, anyone may join and use (read, write) the network without permission. No particular participant has control over the data.

Private or Permissioned blockchain is a system that has a controlled user group, i.e. access to the network is permissioned. In a private blockchain, only the entities participating in a transaction will have knowledge about it.

Consortium blockchain is a private blockchain that works across different organizations.

Smart contracts are programs that each node in the network runs. They are responsible for making computations and altering the state of the blockchain. In public blockchains each operation on a smart contract costs real money to mitigate denial of service attacks.

Hyperledger Fabric^{™} is a modular blockchain distributed ledger framework aimed for use in private enterprises.

Chaincode is a program that runs on Hyperledger Fabric^{™}. It is responsible for handling the state of the blockchain and it is also known as smart contract.

Smart contract storage are variables that persist over individual transactions.

Ethereum^{™} is a public decentralized open source, globally decentralized computing infrastructure that executes smart contracts. It uses a blockchain to synchronize and store the system's state changes, along with a cryptocurrency called ether to meter and constrain execution resource costs. It is conceived as a single threaded "world computer".

Event logs facilitate communication between smart contracts and their user interfaces. In traditional web development, a server response is provided in a call-back to the frontend. In Ethereum^{™}, when a transaction is mined, smart contracts may emit events and write logs to the blockchain that the frontend may then process. There are three use cases for events and logs: a) smart contract return values for the user interface, b) asynchronous triggers with data, c) a cheaper form of storage.

An event allows a contract to log a change of state to the blockchain in a specific format to allow the Ethereum Virtual Machine (VM) to easily retrieve and filter them, and an event may carry with it data about the state change.

Channels (Hyperledger specific) are subnets within the network that may be created on demand. Each channel has its own participants, chaincode and policies. In the context of consortium networks they may be used to offload other busy channels.

## Claims

1. A secure electronic messaging method comprising, at a mail user agent of an electronic message sender:
creating (S1) a hash of a message body, an identity of the sender and an identity of at least one intended recipient of an electronic message to be sent;
including (S1) the hash in a transaction, committing (S2) the transaction to a blockchain network, and receiving from the blockchain network a blockchain transaction identifier in respect of the committed transaction; and
appending (S3) the blockchain transaction identifier to a header of the electronic message before sending (S4) the electronic message to the recipient;
the method further comprising:
after sending an electronic message, querying a receipt table associated with the blockchain network to determine whether the table stores a receipt for the hash;
when it is determined that the table stores a receipt for the hash, determining whether an entity that issued the stored receipt is an intended recipient of the electronic message; and
when the entity that issued the stored receipt is an intended recipient of the electronic message, determining that the intended recipient received the electronic message.

2. A secure electronic messaging method comprising:
at a mail user agent of an electronic message recipient:
in respect of an electronic message received (S31) from a purported sender, determining (S32) if a blockchain transaction identifier is appended to a header of the electronic message;
when a blockchain transaction identifier is appended to the header of the electronic message, creating (S33) a hash of a body of the message, the purported identity of the sender indicated in the electronic message and the identity of the recipient indicated in the electronic message, and comparing (S34) the created hash with a hash stored on a blockchain network identified by the blockchain transaction identifier;
when the created hash matches the stored hash, determining (S35) that it is possible that the received electronic message is from the sender indicated in the electronic message; and
when the created hash does not match with the stored hash, determining (S37) that the received electronic message is not from the sender indicated in the electronic message;
the method further comprising:
at the mail user agent of the electronic message recipient, committing a receipt to the blockchain network indicating that the recipient has received the electronic message, and
at a function Receive() of a smart contract, committing a hash of the receipt that is matched with the hash of the received electronic message, and updating a receipt table to show that a receipt for the received electronic message has been received from the recipient.

3. A method as claimed in claim 2, further comprising:
when the created hash matches the stored hash, determining (S22) if there is a blockchain address registry associated with the blockchain network;
when there is a blockchain address registry associated with the blockchain network, checking (S23) the blockchain address registry to determine if a blockchain address corresponding to the blockchain transaction identifier has an associated valid address in the blockchain address registry;
when an associated valid address is present in the blockchain address registry, determining (S25) that the electronic message was sent by the sender indicated in the electronic message; and
when an associated valid address is not present in the blockchain address registry, determining that the electronic message was not sent by the sender indicated in the electronic message.

4. A computer program which, when executed on a computer, causes that computer to carry out a method as claimed in claim 1, or which, when executed by two computers, causes those computers to carry out a method as claimed in claim 2 or 3, or which, when executed by three computers, causes those computers to carry out a method as claimed in claim 1, and a method as claimed in claim 2 or 3.

5. Electronic apparatus comprising:
a processor (993);
a communication device (997) to send electronic messages and communicate with a blockchain network; and
a memory (994) storing instructions to cause the processor, in respect of an electronic message to be sent, to:
create a hash of a body of the electronic message to be sent, an identity of a sender of the electronic message and an identity of at least one intended recipient of the electronic message;
include the hash in a transaction, and cause the communication device to commit the transaction to a blockchain network and receive from the blockchain network a blockchain transaction identifier in respect of the committed transaction; and
append the blockchain transaction identifier to a header of the electronic message before causing the communication device to send the electronic message to the recipient;
wherein the instructions also cause the processor to:
after sending the electronic message, query a receipt table associated with the blockchain network to determine whether the table stores a receipt for the hash;
when it is determined that the table stores a receipt for the
hash, determine whether an entity that issued the stored receipt is an intended recipient of the electronic message; and
when the entity that issued the stored receipt is an intended recipient of the electronic message, determine that the intended recipient received the electronic message and notify the sender accordingly.

6. Apparatus as claimed in claim 5, wherein the instructions also cause the processor, in respect of an electronic message received from a purported sender, to:
determine if a blockchain transaction identifier is appended to a header of the electronic message;
when a blockchain transaction identifier is appended to the header of the electronic message, create a hash of a body of the message, the purported identity of the sender indicated in the electronic message and the identity of the recipient indicated in the electronic message, use the communication device to find a hash stored on a blockchain network identified by the blockchain transaction identifier, and compare the created hash with the stored hash;
when the created hash matches the stored hash, determine that it is possible that the received electronic message is from the sender indicated in the electronic message;
when the created hash does not match with the stored hash, determine that the received electronic message is not from the sender indicated in the electronic message and alert the recipient accordingly.

7. Apparatus as claimed in claim 6, wherein the instructions also cause the processor to:
when the created hash matches the stored hash, determine if there is a blockchain address registry associated with the blockchain network;
when there is a blockchain address registry associated with the blockchain network, use the communication device to check the blockchain address registry to determine if a blockchain address corresponding to the blockchain transaction identifier has an associated valid address present in the blockchain address registry;
when an associated valid address is present in the blockchain address registry, determine that the electronic message was sent by the sender indicated in the electronic message and inform the recipient that the electronic message is authenticated; and
when an associated valid address is not present in the blockchain address registry, determine that the electronic message was not sent by the sender indicated in the electronic message and alert the recipient accordingly.

## Patentansprüche

1. Verfahren zur sicheren elektronischen Nachrichtenübermittlung, das bei einem Mail User Agent eines Absenders einer elektronischen Nachricht Folgendes umfasst:
Erstellen (S1) eines Hashs eines Nachrichtentextes, einer Identität des Absenders und einer Identität mindestens eines vorgesehenen Empfängers einer zu sendenden elektronischen Nachricht;
Einbeziehen (S1) des Hashs in eine Transaktion, Übertragen (S2) der Transaktion in ein Blockchain-Netzwerk und Empfangen einer Blockchain-Transaktionskennung von dem Blockchain-Netzwerk in Bezug auf die übertragene Transaktion; und
Anhängen (S3) der Blockchain-Transaktionskennung an einen Header der elektronischen Nachricht vor dem Senden (S4) der elektronischen Nachricht an den Empfänger;
wobei das Verfahren ferner Folgendes umfasst:
nach dem Senden einer elektronischen Nachricht Abfragen einer mit dem Blockchain-Netzwerk zugehörigen Empfangstabelle, um festzustellen, ob die Tabelle eine Empfangsbestätigung für den Hash speichert;
wenn festgestellt wird, dass die Tabelle eine Empfangsbestätigung für den Hash speichert, Feststellen, ob eine Entität, die die gespeicherte Empfangsbestätigung ausgestellt hat, ein vorgesehener Empfänger der elektronischen Nachricht ist; und
wenn die Entität, die die gespeicherte Empfangsbestätigung ausgestellt hat, ein vorgesehener Empfänger der elektronischen Nachricht ist, Feststellen, dass der vorgesehene Empfänger die elektronische Nachricht erhalten hat.

2. Verfahren zur sicheren elektronischen Nachrichtenübermittlung, umfassend:
bei einem Mail User Agent eines Empfängers einer elektronischen Nachricht:
Feststellen (S32) in Bezug auf eine elektronische Nachricht, die von einem angeblichen Absender empfangen wurde (S31), ob eine Blockchain-Transaktionskennung an einen Header der elektronischen Nachricht angehängt ist;
wenn eine Blockchain-Transaktionskennung an den Header der elektronischen Nachricht angehängt wird, Erstellen (S33) eines Hashs eines Nachrichtentextes, wobei die angebliche Identität des Absenders in der elektronischen Nachricht angegeben ist und die Identität des Empfängers in der elektronischen Nachricht angegeben ist und Vergleichen (S34) des erstellten Hashs mit einem Hash, der in einem Blockchain-Netzwerk gespeichert ist, das durch die Blockchain-Transaktionskennung identifiziert wird;
wenn der erstellte Hash mit dem gespeicherten Hash übereinstimmt, Feststellen (S35), dass es möglich ist, dass die empfangene elektronische Nachricht von dem in der elektronischen Nachricht angegebenen Absender stammt; und
wenn der erstellte Hash nicht mit dem gespeicherten Hash übereinstimmt, Feststellen (S37), dass die empfangene elektronische Nachricht nicht von dem in der elektronischen Nachricht angegebenen Absender stammt;
wobei das Verfahren ferner Folgendes umfasst:
beim Mail User Agent des Empfängers der elektronischen Nachricht Übertragen einer Empfangsbestätigung an das Blockchain-Netzwerk, die angibt, dass der Empfänger die elektronische Nachricht erhalten hat, und bei einer Funktion "Empfang()" eines Smart Contracts Übertragen eines Hashs der Empfangsbestätigung, der mit dem Hash der empfangenen elektronischen Nachricht übereinstimmt, und Aktualisieren einer Empfangstabelle, um zu zeigen, dass eine Empfangsbestätigung für die empfangene elektronische Nachricht von dem Empfänger empfangen wurde.

3. Verfahren nach Anspruch 2, ferner umfassend:
wenn der erstellte Hash mit dem gespeicherten Hash übereinstimmt, Feststellen (S22), ob es ein Blockchain-Adressregister gibt, das dem Blockchain-Netzwerk zugehörig ist; wenn es ein Blockchain-Adressregister gibt, das dem Blockchain-Netzwerk zugehörig ist, Überprüfen (S23) des Blockchain-Adressregisters, um festzustellen, ob eine Blockchain-Adresse, die der Blockchain-Transaktionskennung entspricht, eine zugehörige gültige Adresse in dem Blockchain-Adressregister hat; wenn eine zugehörige gültige Adresse in dem Blockchain-Adressregister vorhanden ist, Feststellen(S25), dass die elektronische Nachricht von dem in der elektronischen Nachricht angegebenen Absender gesendet wurde; und
wenn eine zugehörige gültige Adresse in dem Blockchain-Adressregister nicht vorhanden ist, Feststellen (S25), dass die elektronische Nachricht nicht von dem in der elektronischen Nachricht angegebenen Absender gesendet wurde.

4. Computerprogramm, das, wenn es auf einem Computer ausgeführt wird, diesen Computer dazu veranlasst, ein Verfahren nach Anspruch 1 auszuführen, oder
das, wenn es von zwei Computern ausgeführt wird, diese Computer dazu veranlasst, ein Verfahren nach Anspruch 2 oder 3 auszuführen, oder
das, wenn es von drei Computern ausgeführt wird, diese Computer dazu veranlasst, ein Verfahren nach Anspruch 1 und ein Verfahren nach Anspruch 2 oder 3 auszuführen.

5. Elektronisches Gerät, umfassend:
einen Prozessor (993);
eine Kommunikationsvorrichtung (997) zum Senden elektronischer Nachrichten und Kommunizieren mit einem Blockchain-Netzwerk; und einen Speicher (994), der Anweisungen speichert, um den Prozessor in Bezug auf eine zu sendende elektronische Nachricht zu Folgendem zu veranlassen:
Erstellen eines Hashs eines Textes der elektronischen Nachricht, einer Identität eines Absenders der elektronischen Nachricht und einer Identität mindestens eines vorgesehenen Empfängers der elektronischen Nachricht;
Einbeziehen des Hashs in eine Transaktion und Veranlassen, dass die Kommunikationsvorrichtung die Transaktion an ein Blockchain-Netzwerk überträgt und von dem Blockchain-Netzwerk eine Blockchain-Transaktionskennung in Bezug auf die übertragene Transaktion empfängt; und
Anhängen der Blockchain-Transaktionskennung an einen Header der elektronischen Nachricht, bevor die Kommunikationsvorrichtung dazu veranlasst wird, die elektronische Nachricht an den Empfänger zu senden;
wobei die Anweisungen den Prozessor außerdem zu Folgendem veranlassen:
Abfragen einer dem Blockchain-Netzwerk zugehörigen Empfangstabelle nach dem Senden einer elektronischen Nachricht, um festzustellen, ob die Tabelle eine Empfangsbestätigung für den Hash speichert;
wenn festgestellt wird, dass die Tabelle eine Empfangsbestätigung für den Hash speichert, Feststellen, ob eine Entität, die die gespeicherte Empfangsbestätigung ausgestellt hat, ein vorgesehener Empfänger der elektronischen Nachricht ist; und
wenn die Entität, die die gespeicherte Empfangsbestätigung ausgestellt hat, ein vorgesehener Empfänger der elektronischen Nachricht ist, Feststellen, dass der vorgesehene Empfänger die elektronische Nachricht erhalten hat und Benachrichtigen des Absenders dementsprechend.

6. Gerät nach Anspruch 5, wobei die Anweisungen den Prozessor in Bezug auf eine von einem angeblichen Absender empfangene elektronische Nachricht außerdem zu Folgendem veranlassen:
Feststellen, ob eine Blockchain-Transaktionskennung an einen Header der elektronischen Nachricht angehängt ist;
wenn eine Blockchain-Transaktionskennung an den Header der elektronischen Nachricht angehängt wird, Erstellen eines Hashs eines Nachrichtentextes, wobei die angebliche Identität des Absenders in der elektronischen Nachricht angegeben ist und die Identität des Empfängers in der elektronischen Nachricht angegeben ist, Verwenden der Kommunikationsvorrichtung zum Auffinden eines Hashs, der in einem Blockchain-Netzwerk gespeichert ist, das durch die Blockchain-Transaktionskennung identifiziert wird, und Vergleichen des erstellten Hashs mit dem gespeicherten Hash;
wenn der erstellte Hash mit dem gespeicherten Hash übereinstimmt, Feststellen, dass es möglich ist, dass die empfangene elektronische Nachricht von dem in der elektronischen Nachricht angegebenen Absender stammt;
wenn der erstellte Hash nicht mit dem gespeicherten Hash übereinstimmt, Feststellen, dass die empfangene elektronische Nachricht nicht von dem in der elektronischen Nachricht angegebenen Absender stammt und Verständigen des Absenders dementsprechend.

7. Gerät nach Anspruch 6, wobei die Anweisungen den Prozessor außerdem zu Folgendem veranlassen:
wenn der erstellte Hash mit dem gespeicherten Hash übereinstimmt, Feststellen, ob es ein Blockchain-Adressregister gibt, das dem Blockchain-Netzwerk zugehörig ist;
wenn es ein Blockchain-Adressregister gibt, das dem Blockchain-Netzwerk zugehörig ist, Verwenden der Kommunikationsvorrichtung zum Überprüfen des Blockchain-Adressregisters, um festzustellen, ob eine Blockchain-Adresse, die der Blockchain-Transaktionskennung entspricht, eine zugehörige gültige Adresse hat, die in dem Blockchain-Adressregister vorhanden ist;
wenn eine zugehörige gültige Adresse in dem Blockchain-Adressregister vorhanden ist, Feststellen, dass die elektronische Nachricht von dem in der elektronischen Nachricht angegebenen Absender gesendet wurde, und Informieren des Empfänger darüber, dass die elektronische Nachricht authentifiziert ist; und
wenn eine zugehörige gültige Adresse in dem Blockchain-Adressregister nicht vorhanden ist, Feststellen, dass die elektronische Nachricht nicht von dem in der elektronischen Nachricht angegebenen Absender gesendet wurde und Verständigen des Absenders dementsprechend.

## Revendications

1. Procédé de messagerie électronique sécurisée comprenant, au niveau d'un agent utilisateur de messagerie d'un expéditeur de message électronique :
la création (S1) d'un hachage d'un corps de message, d'une identité de l'expéditeur et d'une identité d'au moins un destinataire prévu d'un message électronique à envoyer ;
l'inclusion (S1) du hachage dans une transaction, la validation (S2) de la transaction dans un réseau blockchain, et la réception du réseau blockchain d'un identifiant de transaction blockchain en ce qui concerne la transaction validée ; et
l'ajout (S3) de l'identifiant de transaction blockchain à un en-tête du message électronique avant d'envoyer (S4) le message électronique au destinataire ;
le procédé comprenant en outre :
après l'envoi d'un message électronique, l'interrogation d'une table de réception associée au réseau blockchain pour déterminer si la table stocke un reçu pour le hachage ;
lorsqu'il est déterminé que la table stocke un reçu pour le hachage, le fait de déterminer si une entité qui a émis le reçu stocké est un destinataire prévu du message électronique ; et
lorsque l'entité qui a émis le reçu stocké est un destinataire prévu du message électronique, la détermination que le destinataire prévu a reçu le message électronique.

2. Procédé de messagerie électronique sécurisée comprenant :
au niveau d'un agent utilisateur de messagerie d'un destinataire de message électronique :
en ce qui concerne un message électronique reçu (S31) d'un prétendu expéditeur, le fait de déterminer (S32) si un identifiant de transaction blockchain est annexé à un en-tête du message électronique ;
lorsqu'un identifiant de transaction blockchain est ajouté à l'en-tête du message électronique, la création (S33) d'un hachage d'un corps du message, de la prétendue identité de l'expéditeur indiqué dans le message électronique et de l'identité du destinataire indiqué dans le message électronique, et la comparaison (S34) du hachage créé avec un hachage stocké sur un réseau blockchain identifié par l'identifiant de transaction blockchain ;
lorsque le hachage créé correspond au hachage stocké, la détermination (S35) qu'il est possible que le message électronique reçu provienne de l'expéditeur indiqué dans le message électronique ; et
lorsque le hachage créé ne correspond pas au hachage stocké, la détermination (S37) que le message électronique reçu ne provient pas de l'expéditeur indiqué dans le message électronique ;
le procédé comprenant en outre :
au niveau de l'agent utilisateur de messagerie du destinataire de message électronique, la validation d'un reçu vers le réseau blockchain indiquant que le destinataire a reçu le message électronique, et au niveau d'une fonction Receive () d'un contrat intelligent, la validation d'un hachage du reçu qui est mis en correspondance avec le hachage du message électronique reçu, et la mise à jour d'une table de réception pour montrer qu'un reçu pour le message électronique reçu a été reçu du destinataire.

3. Procédé selon la revendication 2, comprenant en outre :
lorsque le hachage créé correspond au hachage stocké, le fait de déterminer (S22) s'il existe un registre d'adresses blockchain associé au réseau blockchain ;
lorsqu'il existe un registre d'adresses blockchain associé au réseau blockchain, la vérification (S23) du registre d'adresses blockchain pour déterminer si une adresse blockchain correspondant à l'identifiant de transaction blockchain a une adresse valide associée dans le registre d'adresses blockchain ;
lorsqu'une adresse valide associée est présente dans le registre d'adresses blockchain, la détermination (S25) que le message électronique a été envoyé par l'expéditeur indiqué dans le message électronique ; et
lorsqu'une adresse valide associée n'est pas présente dans le registre d'adresses blockchain, la détermination que le message électronique n'a pas été envoyé par l'expéditeur indiqué dans le message électronique.

4. Programme informatique qui, lorsqu'il est exécuté sur un ordinateur, amène cet ordinateur à exécuter un procédé selon la revendication 1, ou
qui, lorsqu'il est exécuté par deux ordinateurs, amène ces ordinateurs à exécuter un procédé selon la revendication 2 ou 3, ou
qui, lorsqu'il est exécuté par trois ordinateurs, amène ces ordinateurs à exécuter un procédé selon la revendication 1 et un procédé selon la revendication 2 ou 3.

5. Appareil électronique comprenant :
un processeur (993) ;
un dispositif de communication (997) pour envoyer des messages électroniques et communiquer avec un réseau blockchain ; et
une mémoire (994) stockant des instructions pour amener le processeur, en ce qui concerne un message électronique à envoyer, à :
créer un hachage d'un corps du message électronique à envoyer, d'une identité d'un expéditeur du message électronique et d'une identité d'au moins un destinataire prévu du message électronique ;
inclure le hachage dans une transaction et faire en sorte que le dispositif de communication valide la transaction sur un réseau blockchain et reçoive du réseau blockchain un identifiant de transaction blockchain en ce qui concerne la transaction validée ; et
ajouter l'identifiant de transaction blockchain à un en-tête du message électronique avant d'amener le dispositif de communication à envoyer le message électronique au destinataire ;
dans lequel les instructions amènent également le processeur à :
après l'envoi d'un message électronique, interroger une table de réception associée au réseau blockchain pour déterminer si la table stocke un reçu pour le hachage ;
lorsqu'il est déterminé que la table stocke un reçu pour le hachage, le fait de déterminer si une entité qui a émis le reçu stocké est un destinataire prévu du message électronique ; et
lorsque l'entité qui a émis le reçu stocké est un destinataire prévu du message électronique, déterminer que le destinataire prévu a reçu le message électronique et notifier l'expéditeur en conséquence.

6. Appareil selon la revendication 5, dans lequel les instructions amènent également le processeur, en ce qui concerne un message électronique reçu d'un prétendu expéditeur, à :
déterminer si un identifiant de transaction blockchain est ajouté à un en-tête du message électronique ;
lorsqu'un identifiant de transaction blockchain est ajouté à l'en-tête du message électronique, créer un hachage d'un corps du message, de la prétendue identité de l'expéditeur indiqué dans le message électronique et de l'identité du destinataire indiqué dans le message électronique, utiliser le dispositif de communication pour trouver un hachage stocké sur un réseau blockchain identifié par l'identifiant de transaction blockchain et comparer le hachage créé avec le hachage stocké ;
lorsque le hachage créé correspond au hachage stocké, déterminer qu'il est possible que le message électronique reçu provienne de l'expéditeur indiqué dans le message électronique ;
lorsque le hachage créé ne correspond pas au hachage stocké, déterminer que le message électronique reçu ne provient pas de l'expéditeur indiqué dans le message électronique et alerter le destinataire en conséquence.

7. Appareil selon la revendication 6, dans lequel les instructions amènent également le processeur à :
lorsque le hachage créé correspond au hachage stocké, déterminer s'il existe un registre d'adresses blockchain associé au réseau blockchain ;
lorsqu'il existe un registre d'adresses blockchain associé au réseau blockchain, utiliser le dispositif de communication pour vérifier le registre d'adresses blockchain pour déterminer si une adresse blockchain correspondant à l'identifiant de transaction blockchain a une adresse valide associée dans le registre d'adresses blockchain ;
lorsqu'une adresse valide associée est présente dans le registre d'adresses blockchain, déterminer que le message électronique a été envoyé par l'expéditeur indiqué dans le message électronique et informer le destinataire que le message électronique est authentifié ; et
lorsqu'une adresse valide associée n'est pas présente dans le registre d'adresses blockchain, déterminer que le message électronique n'a pas été envoyé par l'expéditeur indiqué dans le message électronique et alerter le destinataire en conséquence.
